# EUROPEAN PATENT SPECIFICATION

(11) **EP 1 395 134 B1**
(45) Date of publication and mention of the grant of the patent: **03.01.2007**
(21) Application number: 02737309.1
(22) Date of filing: 03.06.2002
(51) Int. Cl.: A23L 3/358, A23B 4/24

(54) **HIGHLY ACIDIC METALATED MIXTURE OF INORGANIC ACIDS**
STARK SAURE METALLISIERTE MISCHUNGEN ANORGANISCHER SÄUREN
MELANGE OBTENU PAR METALLATION FORTEMENT ACIDE D'ACIDES ORGANIQUES

(30) Priority: 04.06.2001 US 873755
(43) Date of publication of application: 10.03.2004
(73) Proprietor: Mionix Corporation, Rocklin, CA 95677 (US)
(72) Inventor: KEMP, Maurice, C., El Dorado Hills, CA 95762 (US); LALUM, Robert, B., Citrus Heights, CA 95621 (US); LEWIS, David, E., Eau Claire, WI 54703 (US)
(74) Representative: Gates, Marie Christina Esther
(86) International application number: PCT/US2002/017231
(87) International publication number: WO 2002/098244

(56) References cited:
- EP-A- 0 312 519
- EP-A- 0 776 613
- WO-A-00/42854
- WO-A-00/48469
- WO-A-00/48477
- WO-A-02/19846
- GB-A- 2 071 075
- US-A- 5 087 467

## Description

### BACKGROUND

This invention relates to a highly acidic metalated mixture of inorganic acids ("HAMMIA"), to its preparation, and to its uses.

In the late 80's and early 90's, researchers in Japan developed strong ionized water ("ASIW") as disinfectants. The SIW was established as water with pH 2.7 or less, having an oxidation-reduction potential of 1,000 mv or more, and chlorine concentration of 0.8 ppm or more. The SIW is prepared by electrolysis of water.

Electrolysis of tap water has also been used to produce "strong acid water" and "strong alkali water" both of which were claimed to have antiseptic properties.

International Publication WO 94/09798 describes a pharmaceutical composition for treatment of disease, injury and other disorders. The pharmaceutical composition comprises a complex of a calcium-containing component and a sulfate-containing component in a pharmaceutically acceptable carrier. The reference teaches the isolation from natural materials, such as peat, the inorganic compositions. The inorganic preparations comprise an alkaline, aqueous or organic, or mixture thereof, extract of peat. Peat is extracted with aqueous solutions, organic solutions or water-miscible organic solvents at temperature from below room temperature up to the boiling point of the solvents. The preferred extracting solvents are those having a pH of at least 9. Biologically active constituents of fractionated peat preparations were identified as CaSO₄•2H₂O (gypsum), CaSO₄•K₂SO₄•H₂O (syngenite, also referred to as the double salt of gypsum) and K₃Na(SO₄)₂ (apthitalite) by X-ray powder diffraction analysis. The reference also describes the synthesis of syngenite.

Chemists describe and measure the ability of a substance to donate protons [H⁺] to a chemical reaction as the pka of that substance where

HA + H₂O → H₃O⁺ + A⁻

Although a hydronium ion is usually represented by H⁺ or H30⁺, its true formula is not certain. The aggregate could be H₅O₂⁺, H₇O₃⁺, or most likely H₉O₄⁺.

The ability to produce large quantities of positively charged water would be extremely important in a large number of applications where water is the medium of the reaction. Positively charged water has the ability to donate protons [H⁺]. The donation of a proton is usually an intermediate step in any acid hydrolysis reaction. Acids are the chemical reagent used to donate protons in an aqueous solution.

A strong acid is used to neutralize and remove the lime, or quicklime, from the brick and mortar. A strong acid, such as hydrochloric acid, also known as muriatic acid, is also used to clean hard water spots on shower stalls, windows, glass, toilets, urinals, mirrors and other surfaces. Hydrochloric acid is used to de-scale water towers and heat exchangers and to adjust the pH of the waste water effluent.

A full strength mineral acid, such as hydrochloric acid, is extremely corrosive to many substances, including metals. In addition, hydrochloric acid at a low pH of 0.5 or so will burn a human skin in seconds. The acid is also very harmful in that it emits fumes irritating to mucous membrane. If left near other chemicals, like bleach, hydrochloric acid will interact with them, even through a typical plastic bottle.

The control of microbial growth is necessary in many practical situations, and significant advances in agriculture, medicine and food science have been made through study of this area of microbiology. "Control of growth" means to prevent growth of microorganisms. This control is effected in one of two basic ways: (1) By killing microorganisms; or (2) by inhibiting the growth of microorganisms. Control of growth usually involves the use of physical or chemical agents which either kill or prevent the growth of microorganisms. Agents which kill cells are called "cidal" agents; agents which inhibit the growth of cells, but without killing them, are referred to as "static" agents. Thus the term "bactericidal" refers to killing bacteria and "bacteriostatic" refers to inhibiting the growth of bacterial cells. A "bactericide" kills bacteria, a "fungicide" kills fungi. "Sterilization" is the complete destruction or elimination of all viable organisms in or on an object being sterilized. The object is either sterile or not, there are no degrees of sterilization. Sterilization procedures involve the use of heat, radiation or chemicals, or physical removal of microorganisms.

Microorganisms tend to colonize and replicate on different surfaces resulting in adherent heterogenous microbial accumulations termed "biofilms." Biofilms may form on surfaces of food substances, feed substances, and instrumentations. The microorganisms in the biofilms may include bacteria, fungi, viruses, and protozoans. Since food safety is a national priority, any product that can help by solving a multitude of problems associated with food production is desirable. Removal and control of biofilms which harbor dangerous microbial contamination is a sanitation goal that needs to be achieved. It is also desirable to be able to safely decontaminate water and nutriment by lowering pH to levels where contaminants would react and organisms cannot live.

As used herein, the term "nutriment" means something that nourishes, heals, or promotes growth and repairs the natural wastage of organic life. Thus, food for a human and feed for an animal are all examples of nutriment materials. Other examples of nutriment materials include beverages, food additive, feed additive, beverage additive, food supplement, feed supplement, beverage supplement, seasoning, spices, flavoring agent, stuffing, food dressing, pharmaceutical, biological product, and others. The nutriment materials can be of plant origin, animal origin, or synthetic. Current sanitizing, disinfectants and pesticides products on the market for these uses contain residues of chlorine, ammonia, organic iodine, metal salts and other deleterious residues. It is desirable to have a way that would preclude these residues by promoting acid hydrolysis without the presence of deleterious chemicals.

Additionally, this method should generate few hazardous volatile gases. Importantly, it is highly desirable to have a composition that can control and the growth of, and kill, microorganisms and, at the same time, destroy the products generated by, or associated with, the microorganisms.

WO/048469 discloses a adduct that has an acidic solution of sparingly-soluble Group IIA complexes ("AGIIS") and at least one additive. The AGIIS can be prepared by mixing a mineral acid (such as sulfuric acid), and a Group IIA hydroxide (such as calcium hydroxide) or a Group IIA salt of a dibasic acid (such as calcium sulfate), or a mixture of the two Group IIA compounds, followed by removing the solid formed. The additives can be an alcohol, an organic acid or a surface active agent. The composition has various uses, including cleaning, food production, decontamination, bioremediation, agricultural application, medical application, and detoxification of substances.

WO0048477 discloses an acidic solution of sparingly-soluble Group IIA complexes ("AGIIS"), its preparation and its uses. The AGIIS can be prepared by mixing a mineral acid (such as sulfuric acid), and a Group IIA hydroxide (such as calcium hydroxide) or a Group IIA salt of a dibasic acid (such as calcium sulfate), or a mixture of the two Group IIA compounds, followed by removing the solid formed. The various uses include cleaning, food production, decontamination, bioremediation, agricultural application, medical application, and detoxification of substances.

WO0219846 discloses a highly acidic metalated organic acid composition, prepared by mixing a monovalent or polyvalent cation and an organic acid in the presence of a strong oxyacid, wherein the resultant acidic composition is less corrosive to a ferrous metal than a solution of a mineral acid having the same acidic pH value as that of the acidic composition, and where in the acid composition is more biocidal than a mixture of the organic acid and metal salt of the organic acid which the mixture has the same acid normality value as that of the acidic composition. The acidic composition can be prepared by mixing at least one regenerating acid, at least one metal base, and at least one organic acid, wherein the amount of the regenerating acid is in excess of the equivalent amount of the metal base.

### SUMMARY

One embodiment of the present invention involves a highly acidic metalated mixture of inorganic acids ("HAMMIA"). The composition has an acidic pH, and can be isolated from a mixture prepared by mixing a salt of phosphoric acid, and a preformed, or in-situ generated, solution or suspension of an acidic sparingly-soluble Group IIA complex ("AGIIS"), wherein the solution or suspension of AGIIS is in an amount sufficient to render the acidic pH of the composition to be less than 2. Another embodiment of the present invention involves a composition having an acidic pH, the composition is isolated from a mixture prepared by mixing a salt of phosphoric acid, and a preformed, or in-situ generated, solution or suspension of AGIIS, wherein the solution or suspension of AGIIS is in an amount in excess of the amount required to completely convert the salt of phosphoric acid to phosphoric acid. Still another embodiment of the present invention involves an adduct which contains the acidic composition discussed above and an additive. Other aspects of the present invention pertain to a prepared nutriment containing a nutriment material and absorbed therein or adsorbed thereon is the acidic composition discussed above or the adduct discussed above. Another aspect of the present invention involves method to reduce biological contaminants in a nutriment material.

### DETAILED DESCRIPTION

One embodiment of the present invention involves a highly acidic metalated mixture of inorganic acids ("HAMMIA"). The composition has an acidic pH, and can be isolated from a mixture prepared by mixing ingredients comprising a salt of phosphoric acid, and a preformed, or in-situ generated, solution or suspension of an acidic sparingly-soluble Group IIA complex ("AGIIS"), wherein the solution or suspension of AGIIS is in an amount sufficient to render the acidic pH of the composition to be less than 2. Another embodiment of the present invention involves a composition having an acidic pH, the composition is isolated from a mixture prepared by mixing ingredients comprising a salt of phosphoric acid, and a preformed, or in-situ generated, solution or suspension of AGIIS, wherein the solution or suspension of AGIIS is in an amount in excess of the amount required to completely convert the salt of phosphoric acid to phosphoric acid. Still another embodiment of the present invention involves an adduct which contains an additive and the acidic composition of the present invention. Other aspects of the present invention pertain to a prepared nutriment containing a nutriment material and absorbed therein or adsorbed thereon is the acidic composition or the adduct of the present invention. Another aspect of the present invention involves method to reduce biological contaminants in a nutriment material.

The acidic, or low pH, solution of sparingly-soluble Group IIA complexes ("AGIIS") may have a suspension of very fine particles and the term "low pH" means the pH is below 7, in the acidic region. The AGIIS has a certain acid normality but does not have the same dehydrating behavior as a saturated calcium sulfate in sulfuric acid having the same normality. In other words, the AGIIS has a certain acid normality but does not char sucrose as readily as does a saturated solution of calcium sulfate in sulfuric acid having the same normality. Further, the AGIIS has low volatility at room temperature and pressure. It is less corrosive to a human skin than sulfuric acid saturated with calcium sulfate having the same acid normality. Not intending to be bound by the theory, it is believed that one embodiment of AGIIS comprises near-saturated, saturated, or super-saturated calcium, sulfate anions or variations thereof, and/or complex ions containing calcium, sulfates, and/or variations thereof.

The term "complex," as used herein, denotes a composition wherein individual constituents are associated. "Associated" means constituents are bound to one another either covalently or non-covalently, the latter as a result of hydrogen bonding or other inter-molecular forces. The constituents may be present in ionic, non-ionic, hydrated or other forms.

The AGIIS can be prepared in several ways. Some of the methods involve the use of Group IA hydroxide but some of syntheses are devoid of the use of any added Group IA hydroxide, although it is possible that a small amount of Group IA metal may be present as "impurities." The preferred way of manufacturing AGIIS is not to add Group IA hydroxide to the mixture. As the phrase implies, AGIIS is highly acidic, ionic, with a pH of below 7, preferably below 2.

A preferred method of preparing AGIIS involves mixing a mineral acid with a Group IIA hydroxide, or with a Group IIA salt of a dibasic acid, or with a mixture of the two Group IIA materials. In the mixing, a salt of Group IIA is also formed. Preferably, the starting Group IIA material or materials selected will give rise to, and form, the Group IIA salt or salts that are sparingly soluble in water. The preferred mineral acid is sulfuric acid, the preferred Group IIA hydroxide is calcium hydroxide, and the prefer Group IIA salt of a dibasic acid is calcium sulfate. Other examples of Group IIA salt include calcium oxide, calcium carbonate, and "calcium bicarbonate."

Thus, for example, AGIIS can be prepared by mixing or blending starting materials given in one of the following scheme with good reproducibility:

(1) H₂SO₄ and Ca(OH)₂;

(2) H₂SO₄, Ca(OH)₂, and CaCO₃;

(3) H₂SO₄, Ca(OH)₂, CaCO₃, and CO₂ (gas);

(4) H₂SO₄, CaCO₃, and Ca(OH)₂;

(5) H₂SO₄, Ca(OH)₂, and CaSO₄;

(6) H₂SO₄, CaSO₄, CaCO₃, and Ca(OH)₂;

(7) H₂SO₄, CaSO₄, CaCO₃, and CO₂ (gas);

and

(8) H₂SO₄, CaSO₄, CaCO₃, CO₂ (gas), and Ca(OH)₂.

Preferably, AGIIS is prepared by mixing calcium hydroxide with concentrated sulfuric acid, with or without an optional Group IIA salt of a dibasic acid (such as calcium sulfate) added to the sulfuric acid. The optional calcium sulfate can be added to the concentrated sulfuric acid prior to the introduction of calcium hydroxide into the blending mixture. The addition of calcium sulfate to the concentrated sulfuric acid appears to reduce the amount of calcium hydroxide needed for the preparation of AGIIS. Other optional reactants include calcium carbonate and gaseous carbon dioxide being bubbled into the mixture. Regardless of the use of any optional reactants, it was found that the use of calcium hydroxide is desirable.

One preferred method of preparing AGIIS can be described briefly as: Concentrated sulfuric acid is added to chilled water (8° - 12°C) in the reaction vessel, then, with stirring, calcium sulfate is added to the acid in chilled water to give a mixture. Temperature control is paramount to this process. To this stirring mixture is then added a slurry of calcium hydroxide in water. The solid formed from the mixture is then removed. This method involves the use of sulfuric acid, calcium sulfate, and calcium hydroxide, and it has several unexpected advantages. Firstly, this reaction is not violent and is not exceedingly exothermic. Besides being easy to control and easy to reproduce, this reaction uses ingredients each of which has been reviewed by the U.S. Food and Drug Administration ("U.S. FDA") and determined to be "generally recognized as safe" ("GRAS"). As such, each of these ingredients can be added directly to food, subject, of course, to certain limitations. Under proper concentration, each of these ingredients can be used as processing aids and in food contact applications. Their use is limited only by product suitability and Good Manufacturing Practices ("GMP"). The AGIIS so prepared is thus safe for animal consumption, safe for processing aids, and safe in food contact applications. Further, the AGIIS reduces biological contaminants in not only inhibiting the growth of, and killing, microorganisms but also destroying the toxins formed and generated by the microorganisms. The AGIIS formed can also preserve, or extend the shelf-life of, consumable products, be they plant, animal, pharmaceutical, or biological products. It also preserves or improves the organoleptic quality of a beverage, a plant product or an animal product. It also possesses certain healing and therapeutic properties.

The sulfuric acid used is usually 95-98% FCC Grade (about 35-37 *N*). The amount of concentrated sulfuric acid can range from about 0.05 *M* to about 18 *M* (about 0.1 *N* to about 36 *N* ), preferably from about 1 M to about 5 M . It is application specific. The term "*M*" used denotes molar or moles per liter.

Normally, a slurry of finely ground calcium hydroxide suspended in water (about 50% of w/v) is the preferred way of introducing the calcium hydroxide, in increments, into the a stirring solution of sulfuric acid, with or without the presence of calcium sulfate. Ordinarily, the reaction is carried out below 40°C, preferably below room temperature, and more preferably below 10°C. The time to add calcium hydroxide can range from about 1 hour to about 4 hours. The agitation speed can vary from about 600 to about 700 rpm or higher. After the mixing, the mixture is filtered through a 5 micron filter. The filtrate is then allowed to sit overnight and the fine sediment is removed by decantation.

The calcium hydroxide used is usually FCC Grade of about 98% purity. For every mole of concentrated acid, such as sulfuric acid, the amount, in mole, of calcium hydroxide used is application specific and ranges from about 0.1 to about 1.

The phosphoric acid used is usually from JT Baker of about 85-88%.

The calcium monohydrogen phosphate is usually of 98-99%; and the calcium phosphate ("the tribasic") is obtained from Mallinckrodt. Other phosphate salts used are all of reagent grade.

The optional calcium carbonate is normally FCC Grade having a purity of about 98%. When used with calcium hydroxide as described above, for every mole of concentrated acid, such as sulfuric acid, the amount, in mole, of calcium carbonate ranges from about 0.001 to about 0.2, depending on the amount of calcium hydroxide used.

The optional carbon dioxide is usually bubbled into the slurry containing calcium hydroxide at a speed of from about 1 to about 3 pounds pressure. The carbon dioxide is bubbled into the slurry for a period of from about 1 to about 3 hours. The slurry is then added to the reaction vessel containing the concentrated sulfuric acid.

Another optional ingredient is calcium sulfate, a Group IIA salt of a dibasic acid. Normally, dihydrated calcium sulfate is used. As used in this application, the phrase "calcium sulfate," or the formula "CaSO₄," means either anhydrous or hydrated calcium sulfate. The purity of calcium sulfate (dihydrate) used is usually 95-98% FCC Grade. The amount of calcium sulfate, in moles per liter of concentrated sulfuric acid ranges from about 0.005 to about 0.15, preferably from about 0.007 to about 0.07, and more preferably from about 0.007 to about 0.04. It is application specific.

In the event that CaSO₄ is used for the reaction by adding it to the solution of concentrated H₂SO₄, the amount of CaSO₄, in grams per liter of solution based on final volume, has the following relationship:

| Final AGIIS Acid Normality *N* | Amount of CaSO₄ in g/l |
|---|---|
| 1-5 | 5 |
| 6-10 | 4 |
| 11-15 | 3 |
| 16-20 | 2 |
| 21-36 | 1 |

The AGIIS obtained could have an acid normality range of from about 0.05 to about 31; the pH of lower than 0; boiling point of from about 100 to about 106°C; freezing point of from about -8°C to about 0°C.

AGIIS obtained from using the reaction of H₂SO₄/Ca(OH)₂/CaSO₄ had the following analyses (average):

### AGIIS With Final Acid Normality of 1.2 N, pH of -0.08

H₃O⁺, 2.22%; Ca, 602 ppm; SO₄, 73560 ppm; K, 1.36 ppb; impurities of 19.68 ppm, and neither Na nor Mg was detected.

### AGIIS With Final Acid Normality of about 29 N, pH of about -1.46

H₃O⁺, 30.68%; Ca, 52.9 ppm; SO₄, 7356000 ppm; K, 38.02 ppb; and neither Na nor Mg was detected.

Aqueous solutions of other alkalis or bases, such as Group IA hydroxide solution or slurry and Group IIA hydroxide solution or slurry can be used. Groups IA and IIA refer to the two Groups in the periodical table. The use of Group IIA hydroxide is preferred. Preferably, the salts formed from using Group IIA hydroxides in the reaction are sparingly soluble in water. It is also preferable to use only Group IIA hydroxide as the base without the addition of Group IA hydroxide.

After the reaction, the resultant concentrated acidic solution with a relatively low pH value, typically below pH 1, can then be diluted with de-ionized water to the desired pH value, such as pH of about 1 or about 1.8.

As discussed above, AGIIS has relatively less dehydrating properties (such as charring sucrose) as compared to the saturated solution of CaSO₄ in the same concentration of H₂SO₄. Further, the stability and non-corrosive nature of the AGIIS of the present invention can be illustrated by the fact that a person can put his or her hand into this solution with a pH of less than 0.5 and, yet, his or her hand suffers no irritation, and no injury. If, on the other hand, one places his or her hand into a solution of sulfuric acid Of pH of less than 0.5, an irritation would occur within a relatively short span of time. A solution of 28 *N* of sulfuric acid saturated with calcium sulfate will cause chemical burn to a human skin after a few seconds of contact. In contrast, AGIIS solution of the same normality would not cause chemical burn to a human skin even after in contact for 5 minutes. The AGIIS does not seem to be corrosive when being brought in contact with the environmental protective covering of plants (cuticle) and animals (skin). AGIIS has low volatility at room temperature and pressure. Even as concentrated as 29 *N,* the AGIIS has no odor, does not give off fumes in the air, and is not irritating to a human nose when one smells this concentrated solution.

The "additive" of the present invention appears to enhance, and also appears to be synergistic to, the effectiveness of the acidic composition of the present invention. Examples of the additive include alcohol, organic acid, periodic acid, and surfactant. The amount of additive added to the AGIIS varies depending on the desired final weight percent of the additive in the final adduct composition. The weight percent of additive needed for the adduct composition of the present invention can vary from about 0.01 to about 99.99, based on the total weight of the final adduct composition. The alcohol additive preferred for the present invention includes methanol, ethanol, 1-propanol, 2-propanol, and other lower alkyl alcohols.

Organic acid additive of the present invention includes carboxylic acid. A carboxylic acid is an organic compound containing the -COOH group, i.e., a carbonyl attached to a hydroxyl group. Preferred organic acids for the present invention include lactic acid, acetic acid, propionic acid, oxalic acid, sorbic acid, butyric acid, benzoic acid, glycolic acid, peracetic acid, and a mixture thereof.

A surfactant for the present invention is a surface-active agent. It is usually an organic compound consisting of two parts: One, a hydrophobic portion, usually including a long hydrocarbon chain; and two, a hydrophilic portion which renders the compound sufficiently soluble or dispersible in water or another polar solvent. Surfactants are usually classified into: (1) anionic, where the hydrophilic moiety of the molecule carries a negative charge; (2) cationic, where this moiety of the molecule carries a positive charge; and (3) non-ionic, which do not dissociate, but commonly derive their hydrophilic moiety from polyhydroxy or polyethoxy structures. Other surfactants include ampholytic and zwitterionic surfactants. A preferred surfactant for the present invention includes polysorbates (Tween 80).

Unless otherwise defined, the amount of each ingredient or component of the present invention is based on the weight percent of the final composition, usually the concentrate before further dilution to achieve the desired pH of about 1.8. The AGIIS having a pH of about 1.8 is usually further diluted with water before applying to an animal product or a plant product.

A "biological contaminant" is a biologically substance, such as a biological organism of the product of a biological organism, that contaminates the environment and useful product, it is a biological material of an extraneous nature. This biological contaminant results in making the environment or product hazardous. A biological contaminant includes a microbe, a mold, and other infectious matter. A microbe is a very minute organism, and both microscopic and ultramicroscopic organisms, including spirochetes, bacteria, rickettsiae, and viruses.

The composition of the present invention was found to be a "preservative." The composition is not corrosive; however, it can create an environment where destructive micro-organisms cannot live and propagate. The utility of this method of preservation is that additional chemicals do not have to be added to the food or other substance to be preserved because the inherent low pH of the mixture is preservative. Since preservative chemicals do not have to be added to the food substance, taste is improved and residues are avoided. Organoleptic testing of a number of freshly preserved and previously preserved food stuffs have revealed the addition of composition improves taste and eliminates preservative flavors. The term "organoleptic" means making an impression based upon senses of an organ or the whole organism.

The following examples are provided to further illustrate this invention and the manner in which it may be carried out. It will be understood, however, that the specific details given in the examples have been chosen for purposes of illustration only and not be construed as limiting the invention. Unless otherwise defined, the amount of each ingredient or component of the present invention is based on the weight percent of the final composition.

### Example 1

### AGIIS Having An Acid Normality of 1.2 To 1.5 Prepared By The Method Of H₂SO₄/Ca(OH)₂.

An amount of 1055 ml (19.2 moles, after purity adjustment and taking into account the amount of acid neutralized by base) of concentrated sulfuric acid (FCC Grade, 95-98% purity) was slowly added with stirring, to 16.868 L of RO/DI water in each of reaction flasks a, b, c, e, and f. The amount of water had been adjusted to allow for the volume of acid and the calcium hydroxide slurry. The mixture in each flask was mixed thoroughly.. Each of the reaction flasks was chilled in an ice bath and the temperature of the mixture in the reaction flask was about 8-12°C. The mixture was continuously stirred at a rate of about 700 rpm.

Separately, a slurry was made by adding RO/DI water to 4 kg of calcium hydroxide (FCC Grace, 98% purity) making a final volume of 8 L. The mole ratio of calcium hydroxide to concentrated sulfuric acid was determined to be 0.45 to 1. The slurry was a 50% (w/v) mixture of calcium hydroxide in water. The slurry was mixed well with a high-shear-force mixer until the slurry appeared uniform. The slurry was then chilled to about 8-12°C in an ice bath and continuous stirred at about 700 rpm.

To each of the reaction flasks was added 150 ml of the calcium hydroxide slurry every 20 minutes until 1.276 L (i.e. 638 g dry weight, 8.61 moles, of calcium hydroxide) of the slurry had been added to each reaction vessel. The addition was again accompanied by efficient mixing at about 700 rpm.

After the completion of the addition of the calcium hydroxide to the reaction mixture in each reaction vessel, the mixture was filtered through a 5-micron filter.

The filtrate was allowed to sit for 12 hours, the clear solution was decanted to discard any precipitate formed. The resulting product was AGIIS having an acid normality of 1.2-1.5.

### Example 2

### AGIIS Having An Acid Normality Of 2 Prepared By The Method Of H₂SO₄/Ca(OH)₂/CaSO₄.

For the preparation of 1 L of 2 *N* AGIIS, an amount of 79.5 ml (1.44 moles, after purity adjustment and taking into account the amount of acid to be neutralized by base) of concentrated sulfuric acid (FCC Grade, 95-98% purity) was slowly added, with stirring, to 854 ml of RO/DI water in a 2 L reaction flask. Five grams of calcium sulfate (FCC Grade, 95% purity) was then added slowly and with stirring to the reaction flask. The mixture was mixed thoroughly. At this point, analysis of the mixture would usually indicate an acid normality of 2.88. The reaction flask was chilled in an ice bath and the temperature of the mixture in the reaction flask was about 8-12°C. The mixture was continuously stirred at a rate of about 700 rpm.

Separately, a slurry was made by adding 50 ml of RO/DI water to 33.26 g (0.44 mole, after purity adjustment) of calcium hydroxide (FCC Grace, 98% purity) making a final volume of 66.53 ml. The mole ratio of calcium hydroxide to concentrated sulfuric acid was determined to be 0.44 to 1. The slurry was mixed well with a high-shear-force mixer until the slurry appeared uniform. The slurry was then chilled to about 8-12°C in an ice bath and continuous stirred at about 700 rpm.

The slurry was then slowly added over a period of 2-3 hours to the mixture, still chilled in an ice bath and being stirred at about 700 rpm.

After the completion of the addition of slurry to the mixture, the product was filtered through a 5-micron filter. It was normal to observe a 20% loss in volume of the mixture due to the retention of the solution by the salt and removal of the salt.

The filtrate was allowed to sit for 12 hours, and the clear solution was then decanted to discard any precipitate formed. The resulting product was AGIIS having an acid normality of 2.

### Example 3

### AGIIS Having An Acid Normality Of 12 Prepared By The Method Of H₂SO₄/Ca(OH)₂/CaSO₄.

For the preparation of 1 L of 12 *N* AGIIS, an amount of 434 ml (7.86 moles, after purity adjustment and taking into account amount of acid neutralized by base) of concentrated sulfuric acid (FCC Grade, 95-98% purity) was slowly added, with stirring, to 284.60 ml of RO/DI water in a 2 L reaction flask. Three grams of calcium sulfate (FCC Grade, 95% purity) was then added slowly and with stirring to the reaction flask. The mixture was mixed thoroughly. The reaction flask was chilled in an ice bath and the temperature of the mixture in the reaction flask was about 8-12°C. The mixture was continuously stirred at a rate of about 700 rpm.

Separately, a slurry was made by adding 211 ml of RO/DI water to 140.61 g (1.86 moles, after purity adjustment) of calcium hydroxide (FCC Grace, 98% purity) making a final volume of 281.23 ml. The mole ratio of calcium hydroxide to concentrated sulfuric acid was determined to be 0.31. The slurry was mixed well with a high-shear-force mixer until the slurry appeared uniform. The slurry was then chilled to about 8-12°C in an ice bath and continuous stirred at about 700 rpm.

The slurry was then slowly added over a period of 2-3 hours to the acid mixture, still chilled in an ice bath and being stirred at about 700 rpm.

After the completion of the addition of slurry to the mixture, the product was filtered through a 5-micron filter. It was normal to observe a 20% loss in volume of the mixture due to the retention of the solution by the salt and removal of the salt.

The filtrate was allowed to sit for 12 hours, and the clear solution was then decanted to discard any precipitate formed. The resulting product was AGIIS having an acid normality of 12.

### Example 4

### General Procedure 1. Formation Of A Phosphoric Acid HAMMIA Using Pre-Formed AGIIS.

The phosphate salt of a divalent metal chosen from List A below (1.00 mole equivalents) is suspended in sufficient deionized water to make a final volume of 625 mL per mole of phosphate ions. The mixture may be sonicated or heated as necessary to aid solubilization of the sparingly soluble phosphate salt. To this stirred suspension, a solution of AGIIS containing the desired concentration of acid (3.05 moles of hydrogen ion per mole of phosphate ion; 2.05 moles of hydrogen ion per mole of hydrogen phosphate ion; 1.05 moles of hydrogen ion per mole of dihydrogen phosphate ion) is added in 10-mL aliquots with the pH being monitored after each addition. Copious precipitates of calcium sulfate form beginning at pH 2. The addition of AGIIS solution may be discontinued as soon as the desired pH is reached. After the addition of the acid is complete, the mixture is stirred for one hour. The agitation is then stopped and the mixture is allowed to settle overnight (approximately 18 hours). The suspended solids are removed by centrifugation at 16000 rpm for 30 minutes. The supernatant solution is the HAMMIA.

| List A: Phosphate Salts |
|---|
| Mg₃(PO₄)₂, MgHPO₄, Mg(H₂PO₄)₂ |
| Ca₃(PO₄)₂, CaHPO₄, Ca(H₂PO₄)₂ |
| Mn₃(PO₄)₂, MnHPO₄, Mn(H₂PO₄)₂ |
| Fe₃(PO₄)₂, FeHPO₄, Fe(H₂PO₄)₂ |
| Co₃(PO₄)₂, CoHPO₄, Co(H₂PO₄)₂ |
| Ni₃(PO₄)₂, NiHPO₄, Ni(H₂PO₄)₂ |
| Cu₃(PO₄)₂, CuHPO₄, Cu(H₂PO₄)₂ |
| Zn₃(PO₄)₂, ZnHPO₄, Zn(H₂PO₄)₂ |

### Example 5

### General Procedure 2. Formation Of A Phosphoric Acid HAMMIA Using AGIIS Formed In Situ.

A mixture of calcium hydroxide (1.00 mole equivalents) and the phosphate salt of a divalent metal chosen from List A below (1.00 mole equivalents) is suspended in sufficient deionized water to make a final volume of approximately 400 mL per mole of metal ions. The mixture may be sonicated or heated as necessary to aid solubilization of the sparingly soluble metal salts. To this stirred suspension, concentrated sulfuric acid (5.05 mole equivalents of hydrogen ion per mole of phosphate ion) is added in 10-mL aliquots with the pH being monitored after each addition. The addition of acid may be discontinued when the desired pH is reached. After the addition of the acid is complete, the mixture is stirred for one hour. The agitation is then stopped and the mixture is allowed to settle overnight (approximately 18 hours). The suspended solids are removed by centrifugation at 16000 rpm for 30 minutes. The supernatant solution is the HAMMIA.

| List A: Phosphate Salts |
|---|
| Mg₃(PO₄)₂, MgHPO₄, Mg(H₂PO₄)₂ |
| Ca₃(PO₄)₂, CaHPO₄, Ca(H₂PO₄)₂ |
| Mn₃(PO₄)₂, MnHPO₄, Mn(H₂PO₄)₂ |
| Fe₃(PO₄)₂, FeHPO₄, Fe(H₂PO₄)₂ |
| Co₃(PO₄)₂, CoHPO₄, CO(H₂PO₄)₂ |
| Ni₃(PO₄)₂, NiHPO₄, Ni(H₂PO₄)₂ |
| Cu₃(PO₄)₂, CuHPO₄, Cu(H₂PO₄)₂ |
| Zn₃(PO₄)₂, ZnHPO₄, Zn(H₂PO₄)₂ |

### Example 6

### General Procedure 3. Formation Of A Phosphoric Acid HAMMIA Containing A Monovalent Metal Using Pre-formed AGIIS.

The phosphate salt of a divalent metal chosen from List A below (1.00 mole equivalents) and the phosphate salt of a monovalent metal chosen from List B below (≤1.00 mole equivalents) is suspended in sufficient deionized water to make a final volume of 625 mL per mole of phosphate ions. The mixture may be sonicated or heated as necessary to aid solubilization of the sparingly soluble divalent metal phosphate salt. To this stirred suspension, a solution of AGIIS containing the desired concentration of acid (3.05 moles of hydrogen ion per mole of phosphate ion; 2.05 moles of hydrogen ion per mole of hydrogen phosphate ion; 1.05 moles of hydrogen ion per mole of dihydrogen phosphate ion) is added in 10-mL aliquots with the pH being monitored after each addition. Copious precipitates of calcium sulfate form beginning at pH 2. The addition of AGIIS solution may be discontinued as soon as the desired pH is reached. After the addition of the acid is complete, the mixture is stirred for one hour. The agitation is then stopped and the mixture is allowed to settle overnight (approximately 18 hours). The suspended solids are removed by centrifugation at 16000 rpm for 30 minutes. The supernatant solution is the HAMMIA.

| List A: | List B: |
|---|---|
| Divalent Metal Phosphate Salts | Monovalent Metal Phosphate Salts |
| Mg₃(PO₄)₂, MgHPO₄, Mg(H₂PO₄)₂ | Li₃PO₄, Li₂HPO₄, LiH₂PO₄ |
| Ca₃(PO₄)₂, CaHPO₄, Ca(H₂PO₄)₂ | Na₃PO₄, Na₂HPO₄, NaH₂PO₄ |
| Mn₃(PO₄)₂, MnHPO₄, Mn(H₂PO₄)₂ | K₃PO₄, K₂HPO₄, KH₂PO₄ |
| Fe₃(PO₄)₂, FeHPO₄, Fe(H₂PO₄)₂ | |
| Co₃(PO₄)₂, CoHPO₄, Co(H₂PO₄)₂ | |
| Ni₃(PO₄)₂, NiHPO₄, Ni(H₂PO₄)₂ | |
| Cu₃(PO₄)₂, CuHPO₄, Cu(H₂PO₄)₂ | |
| Zn₃(PO₄)₂, ZnHPO₄, Zn(H₂PO₄)₂ | |

### Example 7

### General Procedure 4. Formation Of A Phosphoric Acid HAMMIA Containing A Monovalent Metal Using AGIIS Formed In Situ.

A mixture of calcium hydroxide (1.00 mole equivalents) and the phosphate salt of a divalent metal chosen from List A below (1.00 mole equivalents) is suspended in sufficient deionized water to make a final volume of approximately 400 mL per mole of metal ions. The phosphate salt of a monovalent metal chosen from List B below (≤1.00 mole equivalents) is added to the mixture. The mixture may be sonicated or heated as necessary to aid solubilization of the sparingly soluble divalent metal salts. To this stirred suspension, concentrated sulfuric acid (5.05 mole equivalents of hydrogen ion per mole of phosphate ion) is added in 10-mL aliquots with the pH being monitored after each addition. The addition of acid may be discontinued when the desired pH is reached. After the addition of the acid is complete, the mixture is stirred for one hour. The agitation is then stopped and the mixture is allowed to settle overnight (approximately 18 hours). The suspended solids are removed by centrifugation at 16000 rpm for 30 minutes. The supernatant solution is the HAMMIA.

| List A: | List B: |
|---|---|
| Divalent Metal Phosphate Salts | Monovalent Metal Phosphate Salts |
| Mg₃(PO₄)₂, MgHPO₄, Mg(H₂PO₄)₂ | Li₃PO₄, Li₂HPO₄, LiH₂PO₄ |
| Ca₃(PO₄)₂, CaHPO₄, Ca(H₂PO₄)₂ | Na₃PO₄, Na₂HPO₄, NaH₂PO₄ |
| Mn₃(PO₄)₂, MnHPO₄, Mn(H₂PO₄)₂ | K₃PO₄, K₂HPO₄, KH₂PO₄ |
| Fe₃(PO₄)₂, FeHPO₄, Fe(H₂PO₄)₂ | |
| Co₃(PO₄)₂, CoHPO₄, Co(H₂PO₄)₂ | |
| Ni₃(PO₄)₂, NiHPO₄, Ni(H₂PO₄)₂ | |
| Cu₃(PO₄)₂, CuHPO₄, Cu(H₂PO₄)₂ | |
| Zn₃(PO₄)₂, ZnHPO₄, Zn(H₂PO₄)₂ | |

### Example 8

### General Procedure 5. Formation Of A Phosphoric Acid HAMMIA Containing A Monovalent Metal And An Additive Acid Using Pre-formed AGIIS.

One or more of the acids from List C below (up to 6 mole equivalents), the phosphate salt of a divalent metal chosen from List A below (1.00 mole equivalents) and the phosphate salt of a monovalent metal chosen from List B below (≤1.00 mole equivalents) are suspended in sufficient deionized water to make a final volume of 625 mL per mole of phosphate ions. The mixture may be sonicated or heated as necessary to aid solubilization of the sparingly soluble divalent metal phosphate salt. To this stirred suspension, a solution of AGIIS containing the desired concentration of acid (3.05 moles of hydrogen ion per mole of phosphate ion; 2.05 moles of hydrogen ion per mole of hydrgen phosphate ion; 1.05 moles of hydrogen ion per mole of dihydrogen phosphate ion) is added in 10-mL aliquots with the pH being monitored after each addition. Copious precipitates of calcium sulfate form beginning at pH 2. The addition of AGIIS solution may be discontinued as soon as the desired pH is reached. After the addition of the acid is complete, the mixture is stirred for one hour. The agitation is then stopped and the mixture is allowed to settle overnight (approximately 18 hours). The suspended solids are removed by centrifugation at 16000 rpm for 30 minutes. The supernatant solution is the HAMMIA.

| List A: | List B: |
|---|---|
| Divalent Metal Phosphate Salts | Monovalent Metal Phosphate Salts |
| Mg₃(PO₄)₂, MgHPO₄, Mg(H₂PO₄)₂ | Li₃PO₄, Li₂HPO₄, LiH₂PO₄ |
| Ca₃(PO₄)₂, CaHPO₄, Ca(H₂PO₄)₂ | Na₃PO₄, Na₂HPO₄, NaH₂PO₄ |
| Mn₃(PO₄)₂, MnHPO₄, Mn(H₂PO₄)₂ | K₃PO₄, K₂HPO₄, KH₂PO₄ |
| Fe₃(PO₄)₂, FeHPO₄, Fe(H₂PO₄)₂ | |
| Co₃(PO₄)₂, CoHPO₄, Co(H₂PO₄)₂ | |
| Ni₃(PO₄)₂, NiHPO₄, Ni(H₂PO₄)₂ | |
| Cu₃(PO₄)₂, CuHPO₄, Cu(H₂PO₄)₂ | |
| Zn₃(PO₄)₂, ZnHPO₄, Zn(H₂PO₄)₂ | |

| List C: | |
|---|---|
| Additive Acids | |
| formic acid, acetic acid, propionic | |
| acid, butyric acid, malic acid, | |
| glycolic acid, maleic acid, gluconic | |
| acid, periodic acid, peracetic acid, | |
| monoperphthalic acid, benzoic acid, | |
| sorbic acid, oxalic acid. | |

### Example 9

### General Procedure 6. Formation Of A Phosphoric Acid HAMMIA Containing A Monovalent Metal And An Additive Acid Using AGIIS Formed In Situ.

A mixture of calcium hydroxide (1.00 mole equivalents) and the phosphate salt of a divalent metal chosen from List A below (1.00 mole equivalents) is suspended in sufficient deionized water to make a final volume of approximately 400 mL per mole of metal ions. One or more of the acids from List C below (up to 6 mole equivalents), and phosphate salt of a monovalent metal chosen from List B below (≤1.00 mole equivalents) is added to the mixture. The mixture may be sonicated or heated as necessary to aid solubilization of the sparingly soluble divalent metal salts. To this stirred suspension, concentrated sulfuric acid (5.05 mole equivalents of hydrogen ion per mole of phosphate ion) is added in 10-mL aliquots with the pH being monitored after each addition. The addition of acid may be discontinued when the desired pH is reached. After the addition of the acid is complete, the mixture is stirred for one hour. The agitation is then stopped and the mixture is allowed to settle overnight (approximately 18 hours). The suspended solids are removed by centrifugation at 16000 rpm for 30 minutes. The supernatant solution is the HAMMIA.

| List A: | List B: |
|---|---|
| Divalent Metal Phosphate Salts | Monovalent Metal Phosphate Salts |
| Mg₃(PO₄)₂, MgHPO₄, Mg(H₂PO₄)₂ | Li₃PO₄, Li₂HPO₄, LiH₂PO₄ |
| Ca₃(PO₄)₂, CaHPO₄, Ca(H₂PO₄)₂ | Na₃PO₄, Na₂HPO₄, NaH₂PO₄ |
| Mn₃(PO₄)₂, MnHPO₄, Mn(H₂PO₄)₂ | K₃PO₄, K₂HPO₄, KH₂PO₄ |
| Fe₃(PO₄)₂, FeHPO₄, Fe(H₂PO₄)₂ | |
| Co₃(PO₄)₂, CoHPO₄, Co(H₂PO₄)₂ | |
| Ni₃(PO₄)₂, NiHPO₄, Ni(H₂PO₄)₂ | |
| Cu₃(PO₄)₂, CuHPO₄, Cu(H₂PO₄)₂ | |
| Zn₃(PO₄)₂, ZnHPO₄, Zn(H₂PO₄)₂ | |

| List C: | |
|---|---|
| Additive Acids | |
| formic acid, acetic acid, propionic | |
| acid, butyric acid, malic acid, | |
| glycolic acid, maleic acid, gluconic | |
| acid, periodic acid, peracetic acid, | |
| monoperphthalic acid, benzoic acid, | |
| sorbic acid, oxalic acid. | |

### Example 10

### Preparation Of HAMMIA and Adduct Containing HAMMIA And Additive

### Procedure A

The phosphate salt of a divalent metal chosen from List C below (1.00 mole equivalents) is suspended in sufficient deionized water to make a final volume of 625 mL per mole of phosphate ions. The mixture may be sonicated 30 minutes or heated as necessary to aid solubilization of the sparingly soluble phosphate salt. To this stirred suspension concentrated sulfuric acid (167.5 mL per mole of phosphate ions, 97%, 3.05 mole equivalents) is added in 10-mL aliquots each 20 minutes. Below pH 2, copious precipitation of calcium sulfate begins. After the addition of the acid is complete, the mixture is stirred for one hour and the agitation is stopped and the mixture is allowed to settle overnight (approximately 18 hours). The suspended solids are removed by centrifugation at 16000 rpm for 30 minutes.

The supernatant resulting from this procedure using calcium phosphate, Ca₃(PO₄)₂, had a volume of approximately 1 L, a pH of approximately 0.0-0.5, and contained approximately 1000 ppm Ca, 3.80x10⁵ ppm SO₄, and 1.14x10⁵ ppm PO₄.

| List C: Phosphate Salts |
|---|
| Mg₃(PO₄)₂ |
| Ca₃(PO₄)₂ |
| Mn₃(PO₄)₂ |
| Fe₃(PO₄)₂ |
| Co₃(PO₄)₂ |
| Ni₃(PO₄)₂ |
| Cu₃(PO₄)₂ |
| Zn₃(PO₄)₂ |

### Procedure B.

The monohydrogen phosphate salt of a divalent metal chosen from List D below (7.35 moles) is placed in an 8-L container and to deionized water (1.0 L) is added. The mixture is stirred using high shear force mixing during all subsequent additions. To this stirred suspension 1.45 L of a solution of AGIIS having an acid normality of 5.2 *N* is added in 10-mL aliquots. below pH 2, copious precipitation of calcium sulfate begins. After addition of 1.45 L of sulfuric acid, the pH of the mixture is approximately 1.0. After the addition of the acid is complete, a 2-L sample of the mixture is centrifuged at 15000 rpm for 20 minutes.

The supernatant resulting from this procedure using calcium monohydrogen phosphate (CaHPO₄) had a pH of approximately 1.23, and contained approximately 88 ppm Ca, 1800 ppm SO₄, and 1.48x10⁵ ppm PO₄.

| List D: Monohydrogen Phosphate Salts |
|---|
| MgHPO₄ |
| CaHPO₄ |
| MnHPO₄ |
| FeHPO₄ |
| CoHPO₄ |
| NiHPO₄ |
| CuHPO₄ |
| ZnHPO₄ |

### Procedure C.

The monohydrogen phosphate salt of a divalent metal chosen from List D above (11.0 moles) is placed in an 8-L container and deionized water (2.0 L) is added. The mixture is stirred using high shear force mixing during all subsequent additions. To this stirred suspension concentrated sulfuric acid (up to 500 mL, up to 9.15 moles) is added in 10-mL aliquots. The pH may be monitored, and the addition of sulfuric acid ceased when the desired pH is reached. The pH of the solution varies with the quantity of sulfuric acid added approximately as follows: pH 3.0, 40 mL; pH 2.0, 90 mL; pH 1.0, 240 mL; pH 0.5,380 mL; pH 0.0 450 mL; pH<0, 470 mL. Below pH 2, copious precipitation of calcium sulfate occurs. After the addition of the sulfuric acid is complete, the mixture is centrifuged at 15000 rpm for 15-20 minutes.

The supernatant resulting from this procedure using calcium monohydrogen phosphate (CaHPO₄) and 500 mL of concentrated sulfuric acid had an acid concentration of approximately 7 *N,* and contained approximately 1.38x10⁴ ppm SO₄, 4.44x10⁵ ppm PO₄, 1.1 x 10³ ppm Ca.

### Procedure D.

Concentrated phosphoric acid (1L, 16.8 moles) is placed in a container. The oxide, hydroxide, carbonate or basic carbonate salt of a divalent metal chosen from List E below (17.1 moles) is added in 50-g portions to the phosphoric acid and the mixture is well mixed after each addition. Water (2.9 L) is added as necessary to permit efficient mixing of the mixture. After the addition of the base and the water is complete, concentrated sulfuric acid (927 mL, 17.0 moles) is added to the stirred solution in 10-mL aliquots at a rate of 10 mL per 15 minutes. The pH of the solution varies with the quantity of sulfuric acid added approximately as follows: pH 3.0, 30 mL; pH 2.0, 120 mL; pH 1.0, 480 mL; pH 0.5, 640 mL; pH 0.0 710 mL; pH<0, 760 mL. Below pH 2, copious precipitation of calcium sulfate occurs. After the addition of the acid is complete, deionized water (500 mL) is added and the mixture is stirred well. Agitation is then stopped, and the mixture is allowed to settle overnight (approximately 18 hours). The suspended solids are removed by centrifugation at 15000 rpm for 20 minutes.

The supernatant resulting from this procedure using calcium hydroxide (Ca(OH)₂) had a pH below 0.0, and contained approximately 250 ppm Ca, 1.00x10⁵ ppm SO₄, and 3.19x10⁵ ppm PO₄.

| List E: Metal bases |
|---|
| MgO, Mg(OH)₂, MgCO₃, xMgO•yMgCO₃ |
| CaO, Ca(OH)₂, CaCO₃ |
| MnO, Mn(OH)₂, MnCO₃, xMnO•yMnCO₃ |
| FeO, Fe(OH)₂, FeCO₃, xFeO•yFeCO₃ |
| CoO, Co(OH)₂, CoCO₃, xCoO•yCoCO₃ |
| NiO, Ni(OH)₂, NiCO₃, xNiO•yNiCO₃ |
| CuO, Cu(OH)₂, CuCO₃, xCuO•yCuCO₃ |
| ZnO, Zn(OH)₂, ZnCO₃, xZnO•yZnCO₃ |

### Procedure D-1.

Propionic acid (110 mL, 1.48 mol) was dissolved in deionized water (890 mL) and a solution of AGIIS (5 *N,* 74 mL, 0.37 mol hydrogen ion) was added. This solution was stirred, and then solid calcium dihydrogen phosphate (25 g, 0.0214 moles) and calcium hydrogen phosphate (5 g, 0.184 moles) were added with vigorous stirring. As necessary, the mixture was centrifuged to remove suspended solids. The solution prepared by this method had a pH of approximately 1.5, and contained 2.6x10⁴ ppm PO₄, 3.1x10³ ppm SO₄, and 9.3x10⁴ ppm C₂H₅CO₂H.

The same solution may be prepared as a five-fold concentrate by following the same procedure as modified below. The initial solution is prepared by mixing 550 mL (7.37 moles) of propionic acid and 450 mL of water. To this solution, AGIIS (5 *N,* 370 mL, 1.85 moles hydrogen ion) is added. This solution is stirred, and calcium dihydrogen phosphate (25 g, 0.107 moles) and calcium monohydrogen phosphate (125 g, 0.92 moles) are added portionwise with vigorous mixing. As necessary, suspended solids are removed from the final mixture by centrifugation. The resultant solution contains approximately 4.73x10⁴ ppm PO₄, 2.15x10⁵ ppm SO₄, and 4.11x10⁵ ppm C₂H₅CO₂H. Dilution of this solution (200 mL) with deionized water (800 mL) gives a solution with a pH of approximately 1.1, and containing approximately 9.0x10³ PO₄, 6.4x10³ ppm SO₄, and 7.6x10⁴ ppm C₂H₅CO₂H.

### Procedure D-2.

Propionic acid (110 mL, 1.48 mol) was dissolved in deionized water (890 mL) and a solution of AGIIS (5 *N,* 40 mL, 0.25 mol hydrogen ion) was added in 10-mL aliquots. This solution was stirred, and then solid sodium hydrogen phosphate (Na₂HPO₄, 22 g, 0.155 moles) was added portionwise (4 x 5 g, 1 x 2 g) with vigorous stirring. After the addition of sodium hydrogen phosphate, an additional 45 mL of water was added to bring the total volume to 1.0 L. The solution prepared by this method had a pH of approximately 1.5, and contained 7.9x10³ ppm PO₄, 1.1x10⁴ ppm SO₄, and 1.0x10⁵ ppm C₂H₅CO₂H.

The same solution may be prepared as a six-fold concentrate by following the same procedure as modified below. The initial solution is prepared by mixing 660 mL (8.84 moles) of propionic acid and 170 mL of water. To this solution, AGIIS (5 *N,* 240 mL, 1.2 moles hydrogen ion) is added. This solution is stirred, and sodium monohydrogen phosphate (Na₂HPO₄, 132 g, 0.93 moles) is added portionwise with vigorous mixing.

### Procedure D-3.

Propionic acid (110 mL, 1.48 mol) and lactic acid (100 mL, 85% in water, 103 g, 1.14 mol) were dissolved in deionized water (650 mL) and a solution of AGIIS (5 *N*, 28 mL, 0.14 mol hydrogen ion) was added in 10-mL aliquots. This solution is stirred, and then solid sodium hydrogen phosphate (71 g, 0.119 moles) was added portionwise with vigorous stirring. Water (90 mL) was added after addition of the sodium phosphate salts was complete. The solution prepared by this method contained approximately 6.5x10³ ppm PO₄, 7.2x10³ ppm SO₄, 1.0x10⁵ ppm C₂H₅CO₂H and 9.0x10⁴ ppm CH₃CH(OH)CO₂H.

The same solution may be prepared as a three-fold concentrate by following the same procedure as modified below. The initial solution is prepared by mixing 330 mL (4.03 moles) of propionic acid, 330 mL (308 g, 3.76 moles) of lactic acid, and 240 mL of water. A solution of AGIIS (5 *N*, 84 mL, 0.425 moles hydrogen ion) is added to the stirred solution. Solid sodium monohydrogen phosphate (52 g, 0.37 moles) is added portionwise with vigorous mixing. The resultant solution contains approximately 1.8x10⁴ ppm PO₄, 2.2x10⁴ ppm SO₄, and 3.6x10⁵ ppm C₂H₅CO₂H and 3.3x10⁵ ppm CH₃CH(OH)CO₂H. Dilution of this solution 1:3 with deionized water gives a solution containing approximately 5.8x10³ ppm PO₄, 7.0x10³ ppm SO₄, 1.0x10⁵ ppm C₂H₅CO₂H and 9.6x10⁴ ppm CH₃CH(OH)CO₂H.

The same three-fold concentrate may be prepared in gallon quantities by following the procedure as modified below. The initial solution is prepared by mixing 1250 mL of propionic acid, 1250 mL of 85% lactic acid, and 908 mL of water. A solution of AGIIS (5 *N*, 318 mL) is added to the stirred solution. Solid sodium monohydrogen phosphate (193 g) is added portionwise with vigorous mixing. Dilution of this solution 1:3 with deionized water gives a solution with a pH of 1.5, and containing approximately 1.9x10³ ppm PO₄, 3.3x10³ ppm SO₄, 1.0x10⁵ ppm C₂H₅CO₂H and 1.1x10⁵ ppm CH₃CH(OH)CO₂H.

### Procedure D-4

Calcium phosphate (500 g, 1.61 moles) was added to an 8-L container and a solution of AGIIS (1.0 L, 5 *N*, 5.0 moles hydrogen ion) was added dropwise at a rate of approximately 2 mL/minute. The mixture was stirred well, and deionized water (500 mL) was added to aid stirring. A further 500 mL of the AGIIS solution (5 *N*, 2.5 moles hydrogen ion) was added dropwise at a rate of approximately 2 mL/minute with vigorous stirring. The solids were removed from the resultant mixture by centrifugation at 15000 rpm for 20 minutes. The supernatant solution was used as the HAMMIA.

The HAMMIA prepared by this method had a pH of 1.0-1.5, and contained approximately 1.2x10⁴ ppm Ca²⁺, 1.6x10³ ppm SO₄, and 1.5x10⁵ ppm PO₄.

### Discussion

Although not wanting to be bound by any theory, the various adducts solutions containing HAMMIA and an additive acid as well as the various HAMMIA solutions were formed by the regeneration of phosphoric acid from its salts by a regenerating acid. The formation of the acidic solutions led to solutions that, when brought to a pH below 1.0, no longer had a substantial concentration of the metal ion (with calcium salts, the calcium ion concentration was around or below 1000 ppm, i.e. around or below 0.025 *M*). In most of the solutions prepared with calcium salts, the calcium ion concentration was below 200 ppm (0.005 *M*), when the pH was below 1. Thus, these with solutions pH<1 cannot, in general, be equated with a traditional buffer solution, where the concentrations of the metal salt are typically in the 0.1-0.5 M range. However, the anion concentrations are in the much higher concentration ranges; the simplest interpretation of the data would suggest that the solutions contain hydronium ion as the most prevalent cation present. Such solutions might meet the *pro forma* definition of a buffer, but such solutions will not behave as a functional buffer solution. It is noteworthy that the generation of these solutions appeared to pass through a buffer solution phase, where the addition of substantial volumes of the strong regenerating acid (usually AGIIS) had little effect on the pH of the mixture, but after the addition of the theoretical amount of regenerating acid, the pH dropped rapidly with additional regenerating acid. In the pH range above 1, and more especially above 1.5, the solution might act as a calcium dihydrogen phosphate buffer, and, as such, the calcium ion concentration may be much higher than in the pH < 1 solutions. Indeed, until the rapid drop of pH with added regenerating acid, it is possible to have quite high calcium ion concentrations of several thousand parts per million (as high as 0.3 *M*).

### Example 11

### Using Adduct Containing HAMMIA To Decontaminate Hot Dogs

In this experiment, the adduct solution containing HAMMIA, propionic acid, and lactic acid was prepared as described in Procedure D-3 for the "three-fold concentration." The acidic solution was diluted 1:3 with deionized water before use. The adduct solution contained lactate at approximately 100298 ppm, propionate at about 105314 ppm, sulfate at about 7960 ppm, and phosphate at about 7995 ppm. The pH of the adduct was 1.51.

The surface of each of a number of hot dogs was inoculated by dripping with 50 µL of a *Listeria monocytogenes* culture containing 1.38 x 10⁸ Colony Forming Unit ("CFU"), and then allowed to dry. In a treated group, the hot dogs were immersed in the solution of HAMMIA for 30 seconds. The excess solution was allowed to drain for 10 seconds. In a control group, the hot dogs were immersed in a saline solution and drained for the same length of time. Each group of hot dogs was packed into plastic a zip bag and stored at room temperature. After 24 hours, a comparison of the surviving *Listeria* colonies was made. The control group of hot dogs had an average of 3.5 x 10⁹ CFU per hot dog, while the treated group had an average of 5.56 x 10¹ CFU per hot dog.

### Example 12

### Using Adduct Containing HAMMIA To Prolong The Shelf-Life Of Sausages And Hot Dogs.

In this experiment, the adduct solution containing HAMMIA was the same as in Example 11.

Three types of hot dogs (chicken, beef, and a beef, pork, chicken mixture) and beef sausage were used in this experiment. In a treated group, the four meat products were immersed in the adduct solution for 30 seconds, and then allowed to drain. A control group of meat products was used as purchased and was not immersed in any solution. Each group was packed into a plastic zip bag and stored at room temperature. At 3 days and 6 days, the hot dogs and sausages were measured for total plaque count ("TPC").

**Microbial Presence on Untreated and Treated Meat Products at 3 and 6 days**

| Meat product | Treated (CFU per meat product) | Untreated (CFU per meat product) |
|---|---|---|
| 3 days: | | |
| *Chicken hot dog | <1.1 x 10² | 2.08 x 10⁹ |
| Beef hot dog | <1.1 x 10² | 4.5 x 10⁸ |
| Beef, pork, chicken hot dog | <1.1 x 10² | 6.5 x 10⁹ |
| Sausage | <1.1 x 10² | 4.11 x 10⁵ |
| 6 days: | | |
| Chicken hot dog | <1.1 x 10² | 7.03 x 10¹⁰ |
| Beef hot dog | <1.1 x 10² | 3.33 x 10¹⁰ |
| Beef, pork, chicken hot dog | <1.1 x 10² | 5.92 x 10¹⁰ |
| Sausage | <1.1 x 10² | 3.32 x 10¹⁰ |

| | | |
|---|---|---|
| * 1.1 x 10² CFU per hot dog is considered undetectable in the study. | | |

### Example 13

### Using Adduct Containing HAMMIA To Prevent The Growth Of Mold On Pepperoni

In this experiment, the adduct solution containing HAMMIA was the same as in Example 11.

Cooked pepperoni was cut into pieces seven inches in length. A treated group of pepperoni pieces was immersed in the adduct solution for 30 seconds and allowed to drain. A control group of pepperoni pieces was used as purchased and was not immersed in any solution. All of the pepperoni pieces were packaged individually in plastic zip bags and stored at room temperature. After four days, both groups were examined visually. The control group of pepperoni pieces showed green mold growth on the surface, while the treated group did not. The treated group of pepperoni pieces did not show the growth of mold even after more than two months from the start of the experiment.

### Example 14

### Using Adduct Containing HAMMIA To Prevent Microbial Growth In Beef Steaks

In this experiment, the adduct solution containing HAMMIA was the same as in Example 11.

Beef steaks were injected with 1.16 x 10³ CFU per 100 g of *E. coli* 0157:H7 culture and 2.24 x 10³ CFU per 100 g of *Salmonellae.* A treated group of beef steaks was injected with the adduct solution containing HAMMIA. A control group was not injected. Each piece of steak from both groups was left on a tray, sealed with a Saran Wrap^{™}, and stored at 4°C. At four and seven days, the microbial growth in the steaks was measured. At both times there was a 1-4 log reduction in the amount of *E*. *coli* and *Salmonella* present in the treated group compared to the untreated group.

While the preferred compositions or formulations and methods have been disclosed, it will be apparent to those skilled in the art that numerous modifications and variations are possible in light of the above teaching. It should also be realized by those skilled in the art that such modifications and variations do not depart from the spirit and scope of the invention as set forth in the appended claims.

## Claims

1. A composition having an acidic pH, the composition being prepared by mixing ingredients comprising:
a salt of phosphoric acid; and
a preformed, or in situ generated, solution or suspension of an acidic sparingly-soluble Group IIA complex ("AGIIS"), wherein the solution or suspension of AGIIS is in an amount sufficient to render the acidic pH of the composition to be less than 2.

2. The composition of claim 1, wherein the solution or suspension of the AGIIS is isolated from a mixture comprising a mineral acid and a Group IIA hydroxide, or a Group IIA salt of a dibasic acid, or a mixture of the two.

3. The composition of claim 2, wherein the Group IIA hydroxide comprises calcium hydroxide, the mineral acid comprises sulfuric acid and the Group IIA salt of a dibasic acid comprises calcium sulfate.

4. The composition of claims 1 to 3, wherein the solution or suspension of AGIIS having a certain acid normality is less effective in charring sucrose and less corrosive to an animal skin than a saturated solution of calcium sulfate in sulfuric acid having the same acid normality, and wherein the solution or suspension of an AGIIS is of low volatility at room temperature and pressure.

5. The composition of claim 1, wherein the salt of phosphoric acid is selected from the group comprising a divalent metal salt of phosphoric acid and a mono-valent metal salt of phosphoric acid.

6. The composition of claim 5, wherein the divalent metal comprises an alkali earth metal or a metal of first transition series.

7. The composition of claim 5, wherein the mono-valent metal comprises an alkali metal.

8. The composition of claims 1 to 7, further comprising an additive.

9. The composition of claim 8, wherein the additive is selected from the group comprising an alcohol; an organic acid; a surface active agent; and a periodic acid.

10. The composition of claim 9, wherein the alcohol comprises a lower aliphatic alcohol having six or less carbon atoms.

11. The composition of claim 10, wherein the organic acid comprises lactic acid, acetic acid, propionc acid, oxalic acid, peracetic acid, sorbic acid, benzoic acid, butyric acid, glycolic acid, formic acid, monoperphthalic acid, or a mixture thereof.

12. The composition of claim 10, wherein the surface active agent comprises a cationic surface agent, an anionic surface agent, a non-ionic surface active agent, or a mixture thereof.

13. The composition of claim 8, wherein, based on the final weight of the composition, the amount of the additive ranges from 0.01% to 99%.

14. The composition of claims 1 to 3, wherein the solution or suspension of AGITS is present in an amount in excess of the amount required to completely convert the salt of phosphoric acid to phosphoric acid.

15. A prepared nutriment comprising:
a nutriment material; and
absorbed therein or adsorbed thereon being a solution or suspension of a composition having an acidic pH, the composition being prepared by mixing ingredients comprising:
a salt of phosphoric acid; and
preformed, or in-situ generated, solution or suspension of an acidic sparingly-soluble Group IIA complex ("AGIIS"), wherein the solution or suspension of AGIIS is in an amount sufficient to render the acidic pH of the composition to be less than 2.

16. The prepared nutriment of claim 15, wherein the solution or suspension of the AGIIS is isolated from a mixture comprising a mineral acid and a Group IIA hydroxide, or a Group IIA salt of a dibasic acid, or a mixture of the two.

17. The prepared nutriment of claim 16, wherein the Group IIA hydroxide comprises calcium hydroxide, the mineral acid comprises sulfuric acid and the Group IIA salt of a dibasic acid comprises calcium sulfate.

18. The prepared nutriment of claims 15-17, wherein the solution or suspension of AGIIS having a certain acid normality is less effective in charring sucrose and less corrosive to an animal skin than a saturated solution of calcium sulfate in sulfuric acid having the same acid normality, and wherein the solution or suspension of an AGIIS is of low volatility at room temperature and pressure.

19. The prepared nutriment of claim 15 to 18, wherein the salt of phosphoric acid is selected from the group comprising a divalent metal salt of phosphoric acid and a mono-valent metal salt of phosphoric acid.

20. The prepared nutriment of claim 19, wherein the divalent metal comprises an alkali earth metal or a metal of first transition series.

21. The prepared nutriment of claim 19, wherein the mono-valent metal comprises an alkali metal.

22. The prepared nutriment of claims 15 to 21, further comprising an additive.

23. The prepared nutriment of claim 22, wherein the additive is selected from the group comprising; an alcohol, an organic acid; a cationic surface active agent, an anionic surface active agent, a non-ionic surface active agent, or a mixture thereof; a periodic acid.

24. The prepared nutrient of claim 23, wherein the alcohol comprises a lower aliphatic alcohol having six or less carbon atoms.

25. The prepared nutriment of claim 23, wherein the organic acid comprises lactic acid, acetic acid, propionic acid, oxalic acid, peracetic acid, sorbic acid, benzoic acid, butyric acid, glycolic acid, formic acid, monoperphtalic acid, or a mixture thereof.

26. The prepared nutriment of claims 15-25, wherein the nutriment material comprises an animal product, a plant product, a beverage, or a mixture thereof.

27. A prepared nutriment of claims 15 to 26, wherein the solution or suspension of AGIIS is in an amount in excess of the amount required to completely convert the salt of phosphoric acid to phosphoric acid.

28. A method for reducing biological contaminants in a nutriment material comprising:
contacting the nutriment material with a solution or suspension of a composition having an acidic pH, the composition being prepared by mixing ingredients comprising:
a salt of phosphoric acid; and
a preformed, or in-situ generated, solution or suspension of an acidic sparingly-soluble Group IIA complex ("AGIIS"), wherein the solution or suspension of AGIIS is in an amount sufficient to render the acidic pH of the composition to be less than 2.

29. The method of claim 28, wherein the solution or suspension of the AGIIS is isolated from a mixture comprising a mineral acid and a Group IIA hydroxide, or a Group IIA salt of a dibasic acid, or a mixture of the two.

30. The method of claim 29, wherein the Group IIA hydroxide comprises calcium hydroxide, the mineral acid comprises sulfuric acid and the Group IIA salt ofa dibasic acid comprises calcium sulfate.

31. The method of claims 28-30, wherein the solution or suspension of AGIIS having a certain acid normality is less effective in charring sucrose and less corrosive to an animal skin than a saturated solution of calcium sulfate in sulfuric acid having thesameacid normality, and wherein the solution or suspension ofan AGIIS is of low volatility at room temperature and pressure.

32. The method of claims 28-31, wherein the salt of phosphoric acid is selected from the group comprising:
a divalent metal salt of phosphoric acid and a mono-valent metal salt of phosphoric acid.

33. The method of claim 32, wherein the divalent metal comprises an alkali earth metal or a metal of first transition series.

34. The method of claim 32, wherein the mono-valent metal comprises an alkali metal.

35. The method of claims 28 to 34 wherein the composition, further comprises an additive.

36. The method of claim 35, wherein the additive comprises an alcohol, an organic acid; a surface active agent or a periodic acid.

37. The method of claim 36 wherein the alcohol comprises a lower aliphatic alcohol having six or less carbon atoms.

38. The method of claim 36, wherein the organic acid comprises lactic acid, acetic acid, propionic acid, oxalic acid, peracetic acid, sorbic acid, benzoic acid, butyric acid, glycolic acid, formic acid, monoperphthalic acid, or a mixture thereof.

39. The method of claim 36, wherein the surface active agent comprises a cationic surface active agent, an anionic surface active agent, a non-ionic surface active agent, or a mixture thereof.

40. The method of claims 28-39, wherein the nutriment material comprises an animal product, a plant product, a beverage, or a mixture thereof.

41. The method of claims 38 to 40, wherein the solution of suspension of AGIIS is in an amount in excess of the amount required to completely convert the salt of phosphoric acid to phosphoric acid.

42. The method of claims 38 to 41, wherein the biological contaminants comprise microbes or mould.

## Patentansprüche

1. Zusammensetzung mit einem sauren pH, wobei die Zusammensetzung durch Mischen von Bestandteilen hergestellt wird, welche umfassen:
ein Phosphorsäuresalz; und
eine vorgeformte oder in situ gebildete Lösung oder Suspension eines sauren, schwer löslichen Komplexes der Gruppe IIA ("AGIIS"), wobei die Lösung oder Suspension von AGIIS in ausreichender Menge vorliegt, um den sauren pH der Zusammensetzung auf weniger als 2 einzustellen.

2. Zusammensetzung nach Anspruch 1, wobei die Lösung oder Suspension des AGIIS aus einem Gemisch isoliert wird, das eine Mineralsäure und ein Hydroxid der Gruppe IIA oder ein Gruppe IIA-Salz einer zweibasigen Säure oder ein Gemisch der beiden umfasst.

3. Zusammensetzung nach Anspruch 2, wobei das Hydroxid der Gruppe IIA Calciumhydroxid umfasst, die Mineralsäure Schwefelsäure umfasst und das Gruppe IIA-Salz einer zweibasigen Säure Calciumsulfat umfasst.

4. Zusammensetzung nach den Ansprüchen 1 bis 3, wobei die Lösung oder Suspension von AGIIS mit einer bestimmten Säure-Normalität weniger wirksam bei der Verkohlung von Saccharose und weniger aggressiv gegenüber Tierhaut ist als eine gesättigte Lösung von Calciumsulfat in Schwefelsäure mit der gleichen Säure-Normalität, und wobei die Lösung oder Suspension eines AGIIS bei Raumtemperatur und Druck geringe Flüchtigkeit aufweist.

5. Zusammensetzung nach Anspruch 1, wobei das Phosphorsäuresalz aus einem Phosphorsäuresalz eines zweiwertigen Metalls und einem Phosphorsäuresalz eines einwertigen Metalls ausgewählt ist.

6. Zusammensetzung nach Anspruch 5, wobei das zweiwertige Metall ein Erdalkalimetall oder ein Metall der ersten Übergangsreihe umfasst.

7. Zusammensetzung nach Anspruch 5, wobei das einwertige Metall ein Alkalimetall umfasst.

8. Zusammensetzung nach den Ansprüchen 1 bis 7, welche weiter ein Additiv umfasst.

9. Zusammensetzung nach Anspruch 8, wobei das Additiv aus einem Alkohol; einer organischen Säure; einem grenzflächenaktiven Mittel; und einer Periodsäure ausgewählt ist.

10. Zusammensetzung nach Anspruch 9, wobei der Alkohol einen aliphatischen niederen Alkohol mit sechs oder weniger Kohlenstoffatomen umfasst.

11. Zusammensetzung nach Anspruch 10, wobei die organische Säure Milchsäure, Essigsäure, Propionsäure, Oxalsäure, Peressigsäure, Sorbinsäure, Benzoesäure, Buttersäure, Glycolsäure, Ameisensäure, Monoperphthalsäure oder ein Gemisch davon umfasst.

12. Zusammensetzung nach Anspruch 10, wobei das grenzflächenaktive Mittel ein kationisches grenzflächenaktives Mittel, ein anionisches grenzflächenaktives Mittel, ein nicht-ionisches grenzflächenaktives Mittel oder ein Gemisch davon umfasst.

13. Zusammensetzung nach Anspruch 8, wobei die Menge des Additivs, bezogen auf das Endgewicht der Zusammensetzung, im Bereich von 0,01% bis 99% liegt.

14. Zusammensetzung nach den Ansprüchen 1 bis 3, wobei die Lösung oder Suspension von AGIIS in einer Menge im Überschuss zu der Menge vorhanden ist, die erforderlich ist, um das Phosphorsäuresalz vollständig in Phosphorsäure umzuwandeln.

15. Hergestelltes Nahrungsmittel, umfassend:
ein Nahrungsmittel-Material; und
darin absorbiert oder darauf adsorbiert eine Lösung oder Suspension einer Zusammensetzung mit einem sauren pH, wobei die Zusammensetzung durch Mischen von Bestandteilen hergestellt wird, welche umfassen:
ein Phosphorsäuresalz; und
eine vorgeformte oder in situ gebildete Lösung oder Suspension eines sauren, schwer löslichen Komplexes der Gruppe IIA ("AGIIS"), wobei die Lösung oder Suspension von AGIIS in einer ausreichenden Menge vorliegt, um den sauren pH der Zusammensetzung auf weniger als 2 einzustellen.

16. Hergestelltes Nahrungsmittel nach Anspruch 15, wobei die Lösung oder Suspension des AGIIS aus einem Gemisch isoliert wird, das eine Mineralsäure und ein Hydroxid der Gruppe IIA oder ein Gruppe IIA-Salz einer zweibasigen Säure oder ein Gemisch der beiden umfasst.

17. Hergestelltes Nahrungsmittel nach Anspruch 16, wobei das Hydroxid der Gruppe IIA Calciumhydroxid umfasst, die Mineralsäure Schwefelsäure umfasst und das Gruppe IIA-Salz einer zweibasigen Säure Calciumsulfat umfasst.

18. Hergestelltes Nahrungsmittel nach den Ansprüchen 15 bis 17, wobei die Lösung oder Suspension von AGIIS mit einer bestimmten Säure-Normalität weniger wirksam bei der Verkohlung von Saccharose und weniger aggressiv gegenüber Tierhaut ist als eine gesättigte Lösung von Calciumsulfat in Schwefelsäure mit der gleichen Säure-Normalität, und wobei die Lösung oder Suspension eines AGIIS bei Raumtemperatur und Druck geringe Flüchtigkeit aufweist.

19. Hergestelltes Nahrungsmittel nach Anspruch 15 bis 18, wobei das Phosphorsäuresalz aus einem Phosphorsäuresalz eines zweiwertigen Metalls und einem Phosphorsäuresalz eines einwertigen Metalls ausgewählt ist.

20. Hergestelltes Nahrungsmittel nach Anspruch 19, wobei das zweiwertige Metall ein Erdalkalimetall oder ein Metall der ersten Übergangsreihe umfasst.

21. Hergestelltes Nahrungsmittel nach Anspruch 19, wobei das einwertige Metall ein Alkalimetall umfasst.

22. Hergestelltes Nahrungsmittel nach den Ansprüchen 15 bis 21, welches weiter ein Additiv umfasst.

23. Hergestelltes Nahrungsmittel nach Anspruch 22, wobei das Additiv aus einem Alkohol; einer organischen Säure; einem kationischen grenzflächenaktiven Mittel, einem anionischen grenzflächenaktiven Mittel, einem nicht-ionischen grenzflächenaktiven Mittel oder einem Gemisch davon; einer Periodsäure ausgewählt ist.

24. Hergestelltes Nahrungsmittel nach Anspruch 23, wobei der Alkohol einen aliphatischen niederen Alkohol mit sechs oder weniger Kohlenstoffatomen umfasst.

25. Hergestelltes Nahrungsmittel nach Anspruch 23, wobei die organische Säure Milchsäure, Essigsäure, Propionsäure, Oxalsäure, Peressigsäure, Sorbinsäure, Benzoesäure, Buttersäure, Glycolsäure, Ameisensäure, Monoperphthalsäure oder ein Gemisch davon umfasst.

26. Hergestelltes Nahrungsmittel nach den Ansprüchen 15-25, wobei das Nahrungsmittel-Material ein tierisches Produkt, einen Pflanzenprodukt, ein Getränk oder ein Gemisch davon umfasst.

27. Hergestelltes Nahrungsmittel nach den Ansprüchen 15 bis 26, wobei die Lösung oder Suspension von AGIIS in einer Menge im Überschuss zu der Menge vorhanden ist, die erforderlich ist, um das Phosphorsäuresalz vollständig in Phosphorsäure umzuwandeln.

28. Verfahren zur Verringerung biologischer Verunreinigungen in einem Nahrungsmittel-Material, umfassend:
Kontaktieren des Nahrungsmittel-Materials mit einer Lösung oder Suspension einer Zusammensetzung mit einem sauren pH, wobei die Zusammensetzung durch Mischen von Bestandteilen hergestellt wird, welche umfassen:
ein Phosphorsäuresalz; und
eine vorgeformte oder in situ gebildete Lösung oder Suspension eines sauren, schlecht löslichen Komplexes der Gruppe IIA ("AGIIS"), wobei die Lösung oder Suspension von AGIIS in einer ausreichenden Menge vorliegt, um den sauren pH der Zusammensetzung auf weniger als 2 einzustellen.

29. Verfahren nach Anspruch 28, wobei die Lösung oder Suspension des AGIIS aus einem Gemisch isoliert wird, das eine Mineralsäure und ein Hydroxid der Gruppe IIA oder ein Gruppe IIA-Salz einer zweibasigen Säure oder ein Gemisch der beiden umfasst.

30. Verfahren nach Anspruch 29, wobei das Hydroxid der Gruppe IIA Calciumhydroxid umfasst, die Mineralsäure Schwefelsäure umfasst und das Gruppe IIA-Salz der zweibasigen Säure Calciumsulfat umfasst.

31. Verfahren nach den Ansprüchen 28-30, wobei die Lösung oder Suspension von AGIIS mit einer bestimmten Säure-Normalität weniger wirksam bei der Verkohlung von Saccharose und weniger aggressiv gegenüber Tierhaut ist als eine gesättigte Lösung von Calciumsulfat in Schwefelsäure mit der gleichen Säure-Normalität, und wobei die Lösung oder Suspension eines AGIIS bei Raumtemperatur und Druck geringe Flüchtigkeit aufweist.

32. Verfahren nach den Ansprüchen 28-31, wobei das Phosphorsäuresalz ausgewählt ist aus:
einem Phosphorsäuresalz eines zweiwertigen Metalls und einem Phosphorsäuresalz eines einwertigen Metalls.

33. Verfahren nach Anspruch 32, wobei das zweiwertige Metall ein Erdalkalimetall oder ein Metall der ersten Übergangsreihe umfasst.

34. Verfahren nach Anspruch 32, wobei das einwertige Metall ein Alkalimetall umfasst.

35. Verfahren nach den Ansprüchen 28 bis 34, welches weiter ein Additiv umfasst.

36. Verfahren nach Anspruch 35, wobei das Additiv einen Alkohol, eine organische Säure, ein kationisches grenzflächenaktives Mittel, ein anionisches grenzflächenaktives Mittel, ein nicht-ionisches grenzflächenaktives Mittel oder ein Gemisch davon; eine Periodsäure umfasst.

37. Verfahren nach Anspruch 36, wobei der Alkohol einen aliphatischen niederen Alkohol mit sechs oder weniger Kohlenstoffatomen umfasst.

38. Verfahren nach Anspruch 36, wobei die organische Säure Milchsäure, Essigsäure, Propionsäure, Oxalsäure, Peressigsäure, Sorbinsäure, Benzoesäure, Buttersäure, Glycolsäure, Ameisensäure, Monoperphthalsäure oder ein Gemisch davon umfasst.

39. Verfahren nach Anspruch 36, wobei das grenzflächenaktive Mittel ein kationisches grenzflächenaktives Mittel, ein anionisches grenzflächenaktives Mittel, ein nicht-ionisches grenzflächenaktives Mittel oder ein Gemisch davon umfasst.

40. Verfahren nach den Ansprüchen 28 bis 39, wobei das Nahrungsmittel-Material ein tierisches Produkt, ein Pflanzenprodukt, ein Getränk oder ein Gemisch davon umfasst.

41. Verfahren nach den Ansprüchen 38 bis 40, wobei die Lösung oder Suspension von AGIIS in einer Menge im Überschuss zu der Menge vorhanden ist, die erforderlich ist, um das Phosphorsäuresalz vollständig in Phosphorsäure umzuwandeln.

42. Verfahren nach den Ansprüchen 38 bis 41, wobei die biologischen Verunreinigungen Mikroben oder Schimmel umfassen.

## Revendications

1. Une composition présentant un pH acide, cette composition étant préparée par mélangeage d'ingrédients comprenant :
un sel d'acide phosphorique ; et
une solution ou une suspension préformée ou générée in situ d'un complexe acide du Groupe IIA très peu soluble (« AGIIS »), composition dans laquelle la solution ou la suspension d'AGIIS est en quantité suffisante pour rendre le pH acide de la composition inférieur à 2.

2. La composition de la revendication 1, dans laquelle la solution ou la suspension de l'AGIIS est isolée à partir d'un mélange comprenant un acide minéral et un hydroxyde du Groupe IIA ou un sel du Groupe IIA d'un di-acide ou d'un mélange des deux.

3. La composition de la revendication 2, dans laquelle l'hydroxyde du Groupe IIA comprend de l'hydroxyde de calcium, l'acide minéral comprend de l'acide sulfurique et le sel du Groupe IIA d'un di-acide comprend du sulfate de calcium.

4. La composition des revendications 1 à 3, dans laquelle la solution ou la suspension d'AGIIS, présentant une certaine normalité acide, est moins efficace dans la carbonisation du sucrose, et moins corrosive à l'égard d'une peau animale qu'une solution saturée de sulfate de calcium dans l'acide sulfurique ayant la même normalité acide, et dans laquelle la solution ou la suspension d'un AGIIS présente une basse volatilité à température et pression ambiantes.

5. La composition de la revendication 1, dans laquelle le sel d'acide phosphorique est choisi dans le groupe constitué par un sel de métal divalent d'acide phosphorique et un sel de métal monovalent d'acide phosphorique.

6. La composition de la revendication 5, dans laquelle le sel de métal divalent comprend un métal alcalino-terreux ou un métal d'une première série de transition.

7. La composition de la revendication 5, dans laquelle le métal monovalent comprend un métal alcalin.

8. La composition des revendications 1 à 7, comprenant au surplus un additif.

9. La composition de la revendication 8, dans laquelle l'additif est choisi dans le groupe constitué par un alcool ; un acide organique ; un agent tensio-actif ; et un acide periodique.

10. La composition de la revendication 9, dans laquelle l'alcool comprend un alcool aliphatique inférieur contenant 6 atomes de carbone ou moins.

11. La composition de la revendication 10, dans laquelle l'acide organique comprend l'acide lactique, l'acide acétique, l'acide propionique, l'acide oxalique, l'acide peracétique, l'acide sorbique, l'acide benzoïque, l'acide butyrique, l'acide glycolique, l'acide formique, l'acide monoperphtalique ou un de leurs mélanges.

12. La composition de la revendication 10, dans laquelle l'agent tensio-actif comprend un agent tensio-actif cationique, un agent tensio-actif anionique, un agent tensio-actif non-ionique ou un de leurs mélanges.

13. La composition de la revendication 8, dans laquelle la quantité de l'additif représente de 0,01% à 99% du poids final de la composition.

14. La composition des revendications 1 à 3, dans laquelle la solution ou la suspension d'AGIIS est présente à raison d'une quantité supérieure à la quantité nécessaire pour convertir complètement le sel d'acide phosphorique en acide phosphorique.

15. Une préparation nutritionnelle, ou « nutriment », comprenant :
une matière nutritive ; et
absorbée dans celle-ci, ou adsorbée sur celle-ci, une solution ou une suspension d'une composition présentant un pH acide, cette composition étant préparée par mélangeage d'ingrédients comprenant :
un sel d'acide phosphorique ; et
une solution ou une suspension, préformée ou générée in situ, d'un complexe acide du Groupe IIA (« AGIIS ») très peu soluble, composition dans laquelle la solution ou la suspension d'AGIIS est présente en quantité suffisante pour rendre le pH acide de la composition inférieur à 2.

16. La préparation nutritionnelle de la revendication 15, dans laquelle la solution ou la suspension du AGIIS est isolée à partir d'un mélange comprenant un acide minéral et un hydroxyde du Groupe IIA ou un sel du Groupe IIA d'un di-acide ou d'un mélange des deux.

17. La préparation nutritionnelle de la revendication 16, dans laquelle l'hydroxyde du Groupe IIA comprend de l'hydroxyde de calcium, l'acide minéral comprend de l'acide sulfurique et le sel du Groupe IIA d'un di-acide comprend du sulfate de calcium.

18. La préparation nutritionnelle des revendications 15-17, dans laquelle la solution ou la suspension d'AGIIS, présentant une certaine normalité, est moins efficace dans la carbonisation du sucrose, et moins corrosive à l'égard d'une peau animale qu'une solution saturée de sulfate de calcium dans l'acide sulfurique ayant la même normalité acide, et dans laquelle la solution ou la suspension d'un AGIIS présente une basse volatilité à température et pression ambiantes.

19. La préparation nutritionnelle des revendications 15 à 18, dans laquelle le sel d'acide phosphorique est choisi dans le groupe constitué par un sel de métal divalent d'acide phosphorique et un sel d'un métal monovalent d'acide phosphorique.

20. La préparation nutritionnelle de la revendication 19, dans laquelle le métal divalent comprend un métal alcalino-terreux ou un métal d'une première série de transition.

21. La préparation nutritionnelle de la revendication 19, dans laquelle le métal monovalent comprend un métal alcalin.

22. La préparation nutritionnelle des revendications 15 à 21, comprenant au surplus un additif.

23. La préparation nutritionnelle de la revendication 22, dans laquelle l'additif est choisi dans le groupe constitué par un alcool ; un acide organique ; un agent tensio-actif cationique ; un agent tensio-actif anionique ; un agent tensio-actif anionique ou un de leurs mélanges ; et un acide periodique.

24. La préparation nutritionnelle de la revendication 23, dans laquelle l'alcool comprend un alcool aliphatique inférieur contenant six atomes de carbone ou moins.

25. La préparation nutritionnelle de la revendication 23, dans laquelle l'acide organique comprend l'acide lactique, l'acide acétique, l'acide propionique, l'acide oxalique, l'acide peracétique, l'acide sorbique, l'acide benzoïque, l'acide butyrique, l'acide glycolique, l'acide formique, l'acide monoperphtalique, ou un de leurs mélanges.

26. La préparation nutritionnelle ou « nutriment » des revendications 15-25, dans laquelle la matière nutritive comprend un produit animal, un produit végétal, une boisson ou un de leurs mélanges.

27. Une préparation nutritionnelle selon les revendications 15 à 26, dans laquelle la solution, ou la suspension d'AGIIS est présente à raison d'une quantité supérieure à la quantité nécessaire pour complètement convertir le sel d'acide phosphorique en acide phosphorique.

28. Une méthode pour la réduction des contaminants biologiques dans une matière nutritive, cette méthode comprenant :
la mise en contact de la matière nutritive avec une solution ou une suspension d'une composition présentant un pH acide, cette composition étant préparée par mélangeage d'ingrédients comprenant :
un sel d'acide phosphorique ; et
une solution ou une suspension préformée ou générée in situ d'un complexe acide du Groupe IIA (« AGIIS ») très peu soluble, composition dans laquelle la solution ou la suspension d'AGIIS est présente en quantité suffisante pour rendre le pH acide de la composition inférieur à 2.

29. La méthode de la revendication 28, dans laquelle la solution ou la suspension du AGIIS est isolée à partir d'un mélange comprenant un acide minéral et un hydroxyde du Groupe IIA ou un sel du Groupe IIA d'un di-acide, ou un mélange des deux.

30. La méthode de la revendication 29, dans laquelle l'hydroxyde du Groupe IIA comprend de l'hydroxyde de calcium, l'acide minéral comprend de l'acide sulfurique et le sel du Groupe IIA d'un di-acide comprend du sulfate de calcium.

31. La méthode des revendications 28-30, dans laquelle la solution ou la suspension d'AGIIS, présentant une certaine normalité acide, est moins efficace pour carboniser le sucrose et moins corrosive à l'égard d'une peau animale qu'une solution saturée de sulfate de calcium dans l'acide sulfurique ayant la même normalité acide, et dans laquelle la solution ou la suspension d'un AGIIS présente une basse volatilité à température et pression ambiantes.

32. La méthode des revendications 28-31, dans laquelle le sel d'acide phosphorique est choisi dans le groupe comprenant :
un sel de métal divalent d'acide phosphorique et un sel de métal monovalent d'acide phosphorique.

33. La méthode de la revendication 32, dans laquelle le métal divalent comprend un métal alcalino-terreux ou un métal d'une première série de transition.

34. La méthode de la revendication 32, dans laquelle le métal monovalent comprend un métal alcalin.

35. La méthode des revendications 28 à 34, comprenant au surplus un additif.

36. La méthode de la revendication 35, dans laquelle l'additif comprend un alcool ; un acide organique ; un agent tensio-actif cationique ; un agent tensio-actif anionique ; un agent tensio-actif non-ionique ou un de leurs mélanges ; et un acide periodique.

37. La méthode de la revendication 36, dans laquelle l'alcool comprend un alcool aliphatique inférieur contenant six atomes de carbone ou moins.

38. La méthode de la revendication 36, dans laquelle l'acide organique comprend l'acide lactique, l'acide acétique, l'acide propionique, l'acide oxalique, l'acide peracétique, l'acide sorbique, l'acide benzoïque, l'acide butyrique, l'acide glycolique, l'acide formique, l'acide monoperphtalique, ou un de leurs mélanges.

39. La méthode de la revendication 36, dans laquelle l'agent tensio-actif comprend un agent tensio-actif cationique, un agent tensio-actif anionique, un agent tensio-actif non-ionique ou un de leurs mélanges.

40. La méthode des revendications 28-39, dans laquelle la matière nutritive comprend un produit animal, un produit végétal, une boisson ou un de leurs mélanges.

41. La méthode des revendications 38-40, dans laquelle la solution ou la suspension d'AGIIS est présente à raison d'une quantité supérieure à la quantité nécessaire pour complètement convertir le sel d'acide phosphorique en acide phosphorique.

42. La méthode des revendications 38 à 41, dans laquelle les contaminants biologiques comprennent des microbes ou des moisissures.
